# EUROPÄISCHE PATENTANMELDUNG

(11) **EP 2 538 050 A2**
(43) Veröffentlichungstag der Anmeldung: **26.12.2012**
(21) Anmeldenummer: 12168898.0
(22) Anmeldetag: 22.05.2012
(51) Int. Cl.: F01N 3/20

(54) **Vorrichtung zum Einbringen eines Reduktionsmittels in das Abgas einer Brennkraftmaschine**

(30) Priorität: 20.06.2011 DE 102011077791
(71) Anmelder: ROBERT BOSCH GMBH, 70442 Stuttgart (DE)
(72) Erfinder: Gottwald, Frank, 71287 Weissach (DE)

(57) **Zusammenfassung**

Die Erfindung betrifft eine Vorrichtung (16) zum Einbringen eines Reduktionsmittels (24), in das Abgas einer Brennkraftmaschine (10), mit einem Injektor (18), mit einer Befestigungseinrichtung (20) durch die der Injektor (18) wenigsten mittelbar in der Nähe eines Abgasrohrs (12) gehalten ist, und mit einer Kühleinrichtung, welche die Befestigungseinrichtung (20) und Injektor (18) kühlt. Es wird vorgeschlagen, die Kühleinrichtung als rohrförmigen Kühlkanal (30) auszubilden.

## Beschreibung

### Stand der Technik

Die Erfindung betrifft eine Vorrichtung zum Einbringen eines Reduktionsmittels in das Abgas einer Brennkraftmaschine nach dem Oberbegriff des Anspruchs 1. Gegenstand der Erfindung ist ferner ein Verfahren zur Herstellung einer solchen Vorrichtung.

Es ist bekannt, dass der Stickoxidgehalt im Abgas einer Brennkraftmaschine durch eine selektive katalytische Reduktion (SCR) verringert werden kann. Dazu wird dem Abgas eine unmittelbar reduzierend wirkende Substanz wie Ammoniak oder ein Vorprodukt zugeführt, welches erst im Abgas reduzierende Substanzen freisetzt. Als Vorprodukt kann beispielsweise eine Harnstoff-Wasser-Lösung verwendet werden. Ammoniak wird bei der selektiven katalytischen Reduktion mit Stickstoffmonoxid und Stickstoffdioxid zu molekularem Stickstoff und Wasser umgewandelt. Die selektive katalytische Reduktion findet in einem SCR-Katalysator statt.

Die Einbringung des Reduktionsmittels, beispielsweise der Harnstoff-Wasser-Lösung, in das Abgas erfolgt über einen elektrisch ansteuerbaren Injektor. Dieser umfasst wiederum eine Befestigungseinrichtung, mit deren Hilfe der Injektor an einem Flansch eines Abgasrohrs befestigt ist. Der Injektor spritzt das Reduktionsmittel auf diese Weise direkt in das Abgasrohr, stromaufwärts, vor dem SCR-Katalysator, ein.

Solche Injektoren sind beispielsweise aus der DE 10 2007 013 524 A1 bekannt. Um die Funktionsfähigkeit des Injektors zu gewährleisten, ist es auch bekannt, diesen mit einem Kühlkörper zu umgeben, der vom Kühlwasser der Brennkraftmaschine durchflossen wird. Damit ist gewährleistet, dass der Injektor keinen unzulässig hohen Temperaturen ausgesetzt ist.

Ferner ist bekannt, die Kühlkanäle im Aluminium-Druckgussgehäuse der Befestigungseinrichtung des Injektors zu realisieren. Die Kühlkanäle können durch nachträgliches Bohren oder durch Gießen mit verlorenem Kern erzeugt werden. Die genannten Herstellungsverfahren bedingen allerdings einen gewissen Abstand zum eigentlich zu kühlenden Injektor bzw. zum Dosierventil, was sich nachteilig auf die Kühlwirkung auswirkt.

Aktuelle oder zukünftige gesetzliche Anforderungen verlangen eine bessere Injektor- bzw. Ventilspitzenkühlung. Um diese Anforderungen erfüllen zu können, gibt es eine sogenannte Ringkühlung um die Injektorspitze. Bei der Ringkühlung bildet der Kühlkanal einen mehr oder weniger geschlossenen Ring um die Injektorspitze. Allerdings lässt sich dies nur realisieren, indem der verlorene Kern des Kühlkanals oder der Kühlkanal selbst aus mehreren Bauteilen besteht, deren Montageaufwand hoch ist.

### Offenbarung der Erfindung

Das der Erfindung zugrunde liegende Problem wird durch eine Vorrichtung nach Anspruch 1 und ein Verfahren nach nebengeordnetem Anspruch 8 gelöst.

Die Erfindung trifft insbesondere wassergekühlte Injektoren, ist aber nicht auf diese beschränkt.

Eine erfindungsgemäße Lösung besteht darin, dass ein metallisches Rohr, welches in der gewünschten Form des Ringkanals gebogen ist, in eine Spritzgussform für die Befestigungsvorrichtung eingelegt wird. Anschließend wird das Rohr beispielsweise mit Aluminium umspritzt. Dieser Prozess ist als metal injection molding (MIM) bekannt. Durch die Anwendung des metal injection molding wird die Zahl der in die Gussform einzulegenden Bauteile auf eins reduziert.

Dadurch muss der Kühlkanal nicht aus vielen verschiedenen Einzelteilen montiert werden, was die Fertigungskosten reduziert. Außerdem kann auf Dichtungen zwischen den Einzelteilen verzichtet werden, so dass es keine leckageanfälligen Verbindungsstellen gibt.

Besonders vorteilhaft ist, dass an den Enden des aus einem Stahlrohr geformten Kühlkanals Anschlussgeometrien für eine Verbindung mit einem Kühlwasserschlauch ausgeformt sind. Dadurch entfällt in diesem Bereich der Montageaufwand für die nachträgliche Anbringung von Verbindungsstücken.

Eine vorteilhafte Ausgestaltung sieht vor, dass der Kühlkanal in die Befestigungsvorrichtung eingegossen wird. So kann beim Herstellen der Befestigungsvorrichtung auf das kostenintensive Gießen mit verlorenen Kernen verzichtet werden.

Günstig ist es, dass der Werkstoff des Kühlkörpers Stahl umfasst. Stahlrohre sind kostengünstig in einer Vielzahl von Nennweiten und Wandstärken zu beziehen. Außerdem lassen sich Stahlrohre leicht umformen.

Bevorzugt ist die Befestigungsvorrichtung aus Aluminium. Aluminium ist ein leichter, gut wärmeleitender Werkstoff. Außerdem besitzt Aluminium einen niedrigen Schmelzpunkt, so dass es sich mit geringem Energieaufwand verflüssigen lässt.

Eine vorteilhafte Ausgestaltung sieht vor, dass der Kühlkanal einen ringförmigen Abschnitt umfasst. Dadurch ist die Injektorspitze nahezu vollständig vom Kühlkörper umschlossen, wodurch ein guter Wärmetransport erzielt wird.

Weiterhin wird ein Verfahren zur Herstellung einer Vorrichtung der oben beschriebenen Art vorgeschlagen. Die erfindungsgemäße Vorrichtung besitzt die notwendigen Kühlkanäle und bei entsprechender Auslegung die Anschlüsse für die Kühlwasserleitungen. Durch die Ausführung der Kühlkanäle als Einlegeteile können komplexe Kühlstrukturen dargestellt werden, bei deutlich weniger Einzelteilen.

Außerdem besteht die Gefahr nicht, dass Späne oder sonstige Verunreinigungen in die Kühlkanäle gelangen. Bei Bohren der Kühlkanäle oder beim Gießen mit verlorenem Kern passiert dies immer wieder.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Vorab ist anzumerken, dass funktionsäquivalente Elemente in allen Figuren der Zeichnung jeweils mit den gleichen Ziffern gekennzeichnet und nicht jedes Mal erneut beschrieben sind.

Es zeigen:
Figur 1 eine schematische Darstellung einer Brennkraftmaschine mit SCR-Einrichtung
Figur 2 eine schematische Darstellung eines Kühlkörpers
Figur 3 eine schematische Darstellung der erfindungsgemäßen Vorrichtung

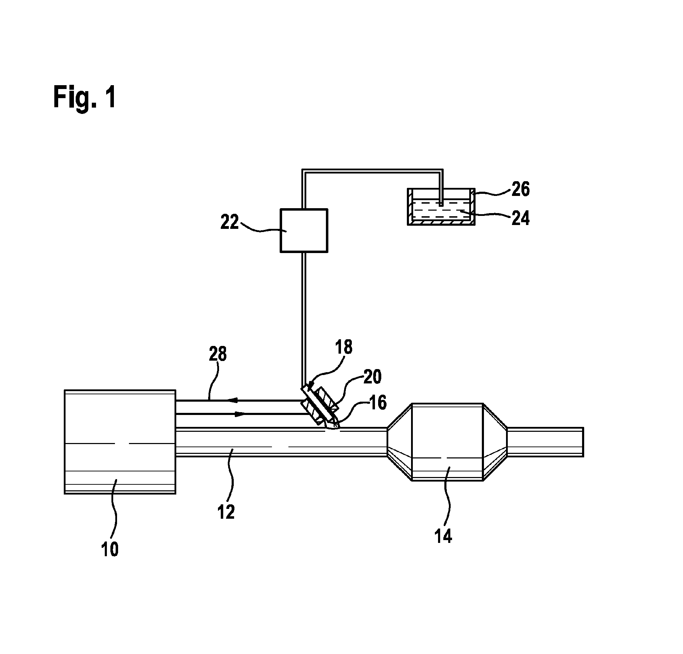

Eine Brennkraftmaschine ist in Figur 1 symbolisch dargestellt und mit dem Bezugszeichen 10 versehen. Heißes Abgas wird durch ein Abgasrohr 12 einem SCR-Katalysator 14 zugeführt. Stromaufwärts von diesem ist an das Abgasrohr 12 eine Vorrichtung 16 angeschlossen. Die Vorrichtung 16 umfasst einen Injektor 18 und eine Befestigungsvorrichtung 20.

Über ein Fördermodul 22 umfassend eine Pumpe und eine Ventileinrichtung wird ein flüssiges Reduktionsmittel 24, häufig in Form einer Harnstoff-Wasser-Lösung, bei Bedarf dem Injektor 18 aus einem Tank 26 zugeführt.

Wenn im Betrieb der Brennkraftmaschine 10 das Reduktionsmittel 24 von dem Injektor 18 in das im Abgasrohr 12 strömende, heiße Abgas in Form von kleinen Tröpfchen eingedüst wird, entsteht aus einer Reaktion des Harnstoffs mit dem Wasser Ammoniak, der anschließend im SCR-Katalysator 14 durch selektive katalytische Reduktion mit Stickstoffmonoxid und Stickstoffdioxid zu molekularem Stickstoff und Wasser umgewandelt wird.

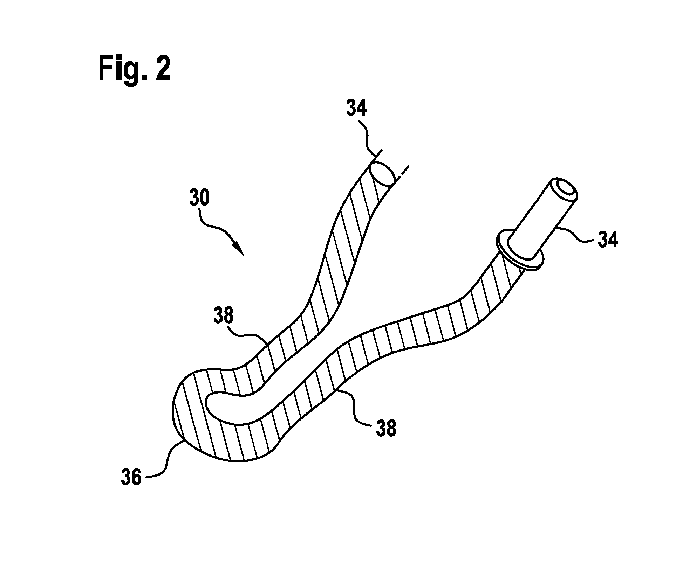

Um die Funktionsfähigkeit des Injektors 18 zu gewährleisten, muss er gekühlt werden. Das erfolgt bevorzugt mittels eines Kühlwasserstroms 28, der Brennkraftmaschine 10, der durch einen in Figur 2 dargestellten Kühlkörper 30 des Injektors 18 geleitet wird.

Figur 2 zeigt den erfindungsgemäßen Kühlkanal 30. Der Kühlkanal 30 ist aus einem Stück Rohr 32, vorzugsweise aus Stahl, durch Biegen und Umformen entstanden. An beiden Enden des Rohres 32 sind Anschlussgeometrien 34 ausgeformt, die für eine dichte Verbindung des Rohres 32 mit einem Kühlmittelschlauch geeignet sind.

Das Rohr 32 ist so geformt, dass es in seiner Mitte einen ringförmigen Abschnitt 36 bildet. An den ringförmigen Abschnitt 36 schließt zu beiden Seiten ein Rohrabschnitt 38 an. Die beiden Rohrabschnitte 38 verbinden die Anschlussgeometrien 34 am Ende des Rohres 32 mit dem ringförmigen Abschnitt 36.

Das Rohr 32 ist so geformt, dass es in die Gussform (nicht dargestellt) für die Befestigungsvorrichtung 20 so eingelegt werden kann, dass der ringförmige Abschnitt 36 den Injektor 18 umschließt. Die als Anschlussgeometrien 34 ausgebildeten Enden des Rohres 32 ragen nach dem Gießen aus der Befestigungsvorrichtung 20 heraus, damit eine hydraulische Verbindung mit den Kühlmittelschläuchen hergestellt werden kann.

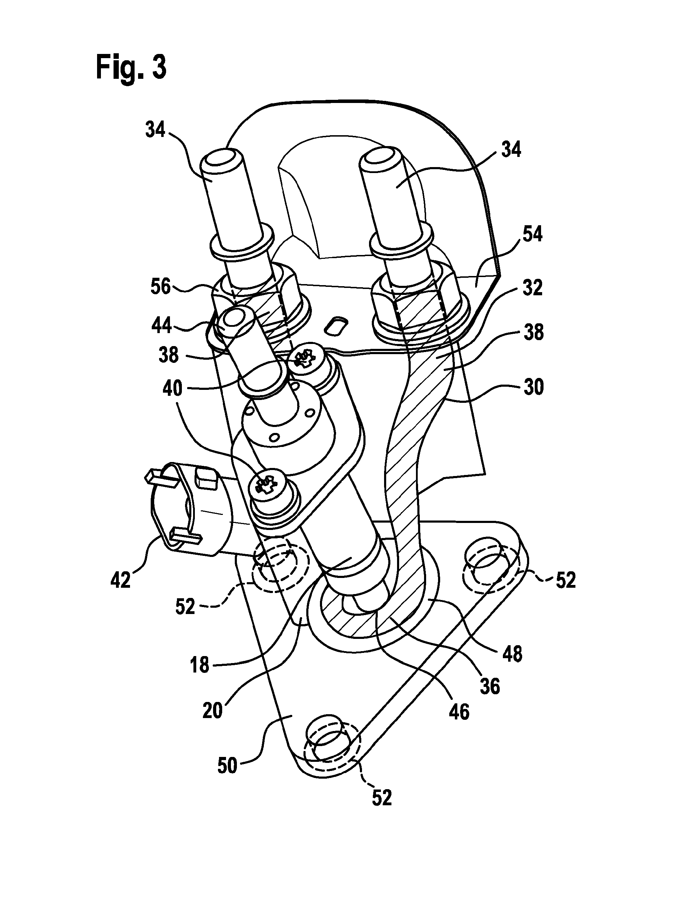

Eine Einbaulage des Kühlkanals 30 ist in Figur 3 dargestellt. Zu sehen ist der Injektor 18, der in der Zeichnung senkrecht von oben in die Befestigungsvorrichtung 20 eingesteckt ist und mittels zweier Verbindungen 40, vorzugsweise Schraubverbindungen, in der Befestigungsvorrichtung 20 befestigt ist. Seitlich ragt aus der Befestigungsvorrichtung 20 ein elektrischer Steckkontakt 42 des Injektors 18.

An dem in der Zeichnung oberen Ende des Injektors 18 ist ein Anschluss 44 ausgebildet durch den das flüssige Reduktionmittel 24 in den Injektor 18 geleitet wird.

Eine Injektorspitze 46 ist an dem Anschluss 44 entgegengesetzten Ende des Injektors 18 in einer Öffnung 48 in einer Bodenplatte 50 der Befestigungsvorrichtung 20 angeordnet. Die Bodenplatte 50 verfügt an ihren Enden über Ausnehmungen 52. Damit ist es möglich, die Befestigungsvorrichtung 20 mitsamt dem Injektor 18 am Abgasrohr 12 so zu befestigen, dass die Injektorspitze 46 durch die Öffnung 48 in der Bodenplatte 50 in das Abgasrohr 12 hineinragt.

In der Figur 3 ist gut zu erkennen, dass der ringförmige Abschnitt 36 des erfindungsgemäßen Kühlkanals 30 die Injektorspitze 46 umschließt. Die Rohrabschnitte 38 verlaufen dabei jeweils rechts und links des Injektors 18 nach oben. Die Enden des Rohres 32 durchdringen eine waagrecht zur Bodenplatte 50 angeordnete Halteplatte 54.

Die Anschlussgeometrien 34 zur Anbindung der Kühlmittelschläuche sind somit in der Zeichnung oberhalb der Halteplatte angeordnet. Bei dieser Ausführung verfügen die Anschlussgeometrien 34 über Gewinde, mit deren Hilfe die Enden des Rohres 32 in der Halteplatte 54 mittels Überwurfmuttern 56 fixiert werden.

Das erfindungsgemäße Herstellverfahren sieht vor, dass das Rohr 32 mit den Anschlussgeometrien 34 vorgeformt und in eine in den Zeichnungen nicht dargestellte Spritzgussform für die Befestigungsvorrichtung 20 eingelegt wird. Anschließend wird das Rohr 32 mit beispielsweise Aluminium umspritzt. Dieser Prozess ist als metal injection moulding (MIM) bekannt.

In der auf diese Weise hergestellte Befestigungsvorrichtung 20 werden dann der Injektor 18 und der Steckkontakt 42 montiert.

Das erfindungsgemäße Herstellverfahren erweitert bekannte Herstellverfahren dahingehend, dass ein gebogenes Rohr 32 anstelle des Gusskerns eingelegt wird.

## Patentansprüche

1. Vorrichtung (16) zum Einbringen eines Reduktionsmittels (24), in das Abgas einer Brennkraftmaschine (10), mit einem Injektor (18), mit einer Befestigungseinrichtung (20) durch die der Injektor (18) wenigsten mittelbar in der Nähe eines Abgasrohrs (12) gehalten ist, und mit einer Kühleinrichtung, welche die Befestigungseinrichtung (20) und Injektor (18) kühlt, **dadurch gekennzeichnet, dass** die Kühleinrichtung als einsteiliger Kühlkanal (30) aus einem gebogenen Rohr (32) ausgebildet ist.

2. Vorrichtung (16) nach Anspruch 1, **dadurch gekennzeichnet, dass** am Kühlkanal (30) mindestens eine Anschlussgeometrie (34) für eine Verbindung mit einem Kühlwasserschlauch ausgeformt ist.

3. Vorrichtung (16) nach einem der vorangehenden Ansprüche, **dadurch gekennzeichnet, dass** der Kühlkanal (30) in die Befestigungsvorrichtung (20) eingegossen ist.

4. Vorrichtung (16) nach einem der vorangehenden Ansprüche, **dadurch gekennzeichnet, dass** der Kühlkanal (30) aus Stahlrohr besteht.

5. Vorrichtung (16) nach einem der vorangehenden Ansprüche, **dadurch gekennzeichnet, dass** die Befestigungsvorrichtung (20) aus Aluminium gegossen ist.

6. Vorrichtung (16) nach einem der vorangehenden Ansprüche, **dadurch gekennzeichnet, dass** der Kühlkörper (30) einen ringförmigen Abschnitt (36) umfasst, der eine Injektorspitze (46) des Injektors (18) umschließt.

7. Verfahren zur Herstellung einer Befestigungsvorrichtung (20) mit einem Kühlkanal (30), **dadurch gekennzeichnet, dass** der Kühlkanal (30) aus einem Rohr (32) vorgeformt wird, dass der vorgeformte Kühlkanal (30) in eine Gussform eingelegt wird und anschließend umgossen wird.

8. Verfahren nach Anspruch 7, **dadurch gekennzeichnet, dass** der Kühlkanal an mindesten einem Ende eine Anschlussgeometrie (34) für eine Verbindung mit einem Kühlwasserschlauch verfügt.
